# EUROPEAN PATENT SPECIFICATION

(11) **EP 2 200 363 B1**
(45) Date of publication and mention of the grant of the patent: **14.05.2014**
(21) Application number: 08172659.8
(22) Date of filing: 22.12.2008
(51) Int. Cl.: H04W 72/12, H04L 5/00, H04W 24/10

(54) **Wireless communication systems**
Drahtlose Kommunikationssysteme
Systèmes de communications sans fil

(43) Date of publication of application: 23.06.2010
(73) Proprietor: Fujitsu Ltd., Kawasaki-shi, Kanagawa 211-8588 (JP)
(72) Inventor: Agarwal, Rajni, Harrow, HA3 0AT (GB); Power, Kevin, West Drayton, Middlesex UB7 9FD (GB)
(74) Representative: Wilding, Frances Ward

(56) References cited:
- WO-A-2007/053851
- US-A1- 2007 254 595
- ANONYMOUS ED - ANONYMOUS: "IEEE Standard for Local and metropolitan area networks Part 16: Air Interface for Fixed and Mobile Broadband Wireless Access Systems Amendment 2: Physical and Medium Access Control Layers for Combined Fixed and Mobile Operation in Licensed Bands and Corrigendum 1; IEEE Std 802.16e-2005 and IEEE Std" IEEE STANDARD; [IEEE STANDARD], IEEE, PISCATAWAY, NJ, USA, 1 January 2006 (2006-01-01), pages _1-822, XP017601713 ISBN: 978-0-7381-4856-4

## Description

The present invention relates to information sent from user equipment in a wireless communication network to network stations, such as base stations and relay stations. In particular, the invention relates to mechanisms for controlling the latency and increasing the capacity for such information to be sent to the network by the user apparatus in an efficient manner.

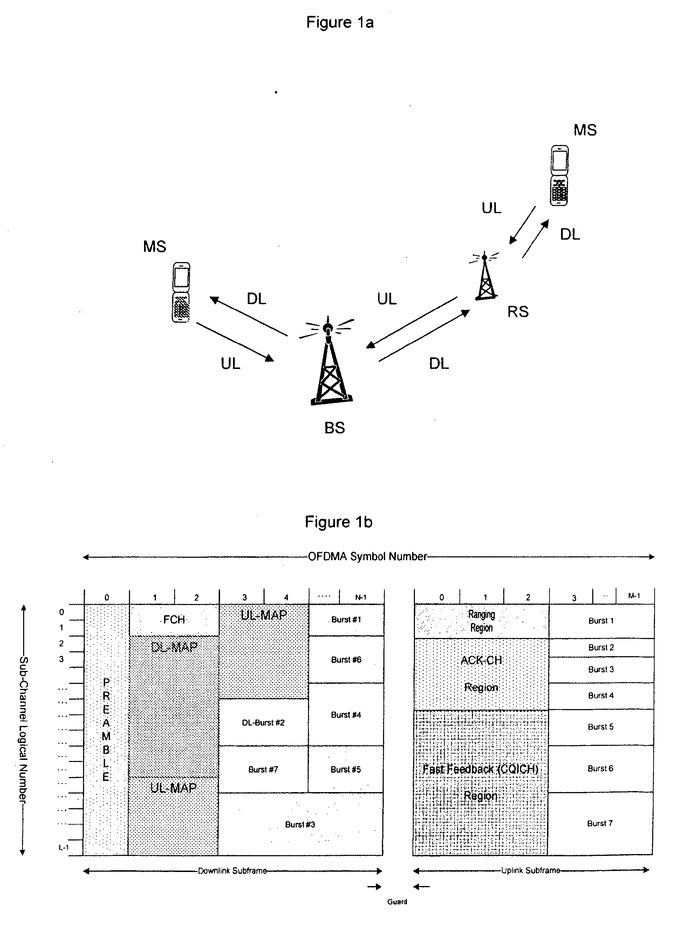

The invention relates to wireless communications networks using OFDMA, CDMA and other wireless communication methods employed in modern standards, such as the WiMAX standards. Figure 1 shows the basic components of a cell of a wireless communication system, with two subscriber stations shown as mobile stations (MS) a base station (BS) and a relay station (RS). Control signalling and data is sent towards the MSs on the downlink (DL) and towards the BS on the uplink (UL). Each station has processing and reception and transmission means for carrying out its role in the network. The processing means can be controlled by software and/or firmware and/or hardware, which operate to provide a wireless service to the users.

Modern standards define many features which if combined, can potentially improve the system throughput and ultimately ensure that the user experiences the best possible performance. However, in order for the combinations to operate efficiently according to the standards, the base station (BS) or relay station (RS) will require information such as knowledge of the (downlink) propagation channel that each subscriber station (also referred to as the mobile station (MS)) is experiencing.

In current OFDMA based wireless communication systems adopting the WiMAX 802.16e-2005 standard, a TDD (time division duplexing) frame structure may be used. The TDD frame structure used in 802.16 shown in Figure 1b and comprises two subframes, one for downlink (DL) and the other for uplink (UL). 3GPP LTE also has a TDD frame structure with a downlink and an uplink subframe. Some other standards such as 802.16 m have multiple downlink and uplink subframes within a single frame, sometimes designated a "radio frame" to avoid confusion with other standards. One issue with the TDD frame structure in particular can be a shortage of radio resources for uplink transmission in each frame. The time length for each frame is limited. For example, the 802.16e-2005 standard specifies many possible frame durations ranging from 2ms to 20ms in length. However, the existing WiMAX forum profile (Release 1.0), requires that only 5ms frames shall be used as this will help ensure that all WiMAX forum certified equipment is interoperable.

Turning to the 802.16e-2005 example again, information is sent from the MS to the BS using allocated resource in each uplink subframe. For channel information, for example, the BS may allocate the MS with a specific CQICH channel(s) (channel quality indicator channel) that resides within the CQICH region shown in the uplink subframe in Figure 1 b.

The allocated CQICH channel(s) can be used by the MS to report either physical or effective SINR (signal to interference and noise ratio), one of which will be instructed by the BS. In this case, the MS will calculate a channel quality measurement based on the physical or effective CINR (channel to interference and noise ratio) which will provide information on the actual operating condition of the receiver, including interference and noise levels, and signal strength. This information is then fed back to the BS via the allocated CQI feedback channel (CQICH) and as a result the BS may use this to efficiently manage its radio resources or to perform basic link adaptation for the MS. This type of control can often be referred to as 'dedicated control' or "PHY layer control", as some resource will be reserved in every uplink subframe.

Looking at this example in more detail and considering the legacy IEEE 802.16e-2005 TDD frame structure, the first symbol is occupied by a Preamble which is mainly used for synchronisation purposes, but is also used for transmitter identification during network entry and handover procedures. On the second and third symbols following the Preamble is the FCH (frame control header). The FCH is transmitted using a well-known format and provides sufficient information to decode the following MAP message, i.e. the media access protocol (MAP) message length, coding scheme and active sub-channels. Following the FCH is the DL-MAP which may be followed by the UL-MAP. These MAP messages provide information on the allocated resource (slots) for traffic and control channels within the frame in the form of information elements (IE's). The MAP's contain DL-MAP_IE's and UL-MAP_IE's which define bursts within the frames, (i.e. one MAP_IE will be related to 1 burst within the frame). The information within these MAP_IE's, such as the subchannel offset and symbol offset are crucial, as these are used by the MS to locate the resource within the subframes. Another important element contained within the lEs is the 16-bit CID (Connection ID) which is used to uniquely map Data/Control bursts within a frame to specific users. For example, upon receiving and decoding the DL-MAP, the MS will search through the DL-MAP-lEs until its unique CID is found. When a DL-MAP IE containing this CID is found it will firstly provide the location of the burst within the frame and secondly provide the required information for the MS to attempt decoding of the data (PDU) contained within the burst.

For the purposes of the fast feedback CQICH region (shown in Figure 1 b), a fast feedback IE will be transmitted in the UL-MAP which will inform all the MSs of its location within the UL subframe (i.e., subchannel and symbol offsets). Note, this CQICH region will comprise of an integer number of slots (1 subchannel by 3 OFDMA symbols), where one slot can be used as a single CQICH channel.

The current IEEE802.16e-2005 standard has a major limitation in that only two concurrent CQICH channels can be supported by any MS and other standards have similar limitations. For a system employing many features to maximise system performance such as adaptive MIMO switching, localized/distributed switching and/or FFR, having only two CQICH channels per MS makes it very difficult for the BS to accurately adapt to the best possible radio configuration and efficiently manage the radio resources. It may make sense to increase the number of available CQICH channels per MS, but this would be at the expense of reducing uplink capacity (especially in a TDD system) thus diminishing the accessible resource for raw data.

For each report, the BS will instruct which type of measurement is to be reported on each CQICH channel via two independent CQICH_Allocation_IEs which will be transmitted within the UL-MAP. These information elements can be sent once to each MS and the MS can periodically/persistently (for *x* frames) report the required measurements on the specified channel indicted by a user specific CQICH_ID.

Given that, in most cases, the fast feedback region will be of a fixed size (i.e., not dynamic) then it makes it very difficult for the BS to request a measurement from a MS on an event triggered basis especially if the dedicated CQICH region is fully occupied. In the present IEEE 802.16e-2005 standard, a MAC layer signalling mechanism known as REP-REQ/RSP (report request / report response) protocol can potentially be used to facilitate a measurement on an event triggered basis. The same mechanism can be used for other types of information so that this is a flexible way of collecting MS information. The REP-REQ/RSP are MAC (Medium Access Control) layer management messages of type 'Basic' and therefore require a transport connection of the type 'Basic management connection' to be established between the BS and MS. Furthermore, there are no dedicated resources for MAC Layer messages thereby necessitating additional MAC layer signaling associated with dynamic UL resource or bandwidth allocation specific to corresponding MAC management messages i.e. REP-REQ/RSP in this case. In other words, these additional MAC layer procedures require specific dynamic bandwidth allocation; they basically control the contention between users and enable the service to be tailored to the delay and bandwidth requirements of each user application.

The MAC layer approach can be very inefficient for requesting MS measurements on an event triggered basis, especially for efficient management of BS resources as the latency involved is very unpredictable. This unpredictability may result in long delays from when the BS requests a report until the transmission of the report from the MS, consequently leading to degradation in system performance due to inaccurate/out of date reports.

US 2007/0254595 discloses a method of using pre-allocated channels for specific CQI reports. WO 2007/053851 discloses an MS initiated gap in transmission to the MS, to allow an opportunity for the MS to take measurements.

Another possibility is to increase size of the fast feedback region dynamically in order to be able to provide additional feedback slots for transmitting information. However, the difficulty in this approach is in the amount of signalling required to adjust the size of the region. In particular if the fast feedback region is filled to capacity so that one user must be moved into a newly allocated additional part of the region it could be that some or all the other users need to be moved about in the CQICH region. This applies equally if the existing CQICH signalling for a single user is moved out of the CQICH region to make room for another use of that area.

Embodiments of the invention overcome or at least mitigate the disadvantages of the prior art approaches, allowing further information to be transmitted from the MS to facilitate modern transmission techniques and/or allowing an increased number of users per network station.

The invention is defined in the independent claims, to which reference should now be made. Advantageous developments are set out in the sub claims.

Embodiments of a first aspect of the invention thus allow a method of a subscriber station to provide information, as a result of a trigger, to a network station in a wireless communications system comprising the network station and the subscriber station, the method comprising:
the network station providing an indication of timing for sending the information to the network station;
the network station transmitting a MAC layer request for the information to the subscriber station; and
the subscriber station then using a MAC layer message to transmit the information to the network station at a time corresponding to the indication of timing; wherein
the indication of timing is in the form of a time offset from the request for information, indicating a frame or subframe offset between a frame or subframe in which the request is sent and a frame or subframe in which the information is to be sent; and wherein
after the request for information and indication of timing, the network station sends an uplink bandwidth allocation message to the subscriber station to allow the information to be sent.

Thus the invention embodiments use the flexibility of the MAC layer approach but supplement this with a timing indication or allocation. The information can then be transmitted at a time corresponding to the indication of timing; that is at or after the time indicated as will be appreciated from the discussion to follow. Surprisingly, the present inventors have found that it is possible with this simple measure to substantially increase the feasibility of MAC layer signalling for event trigged information supply to the network station.

The invention embodiments solve the inherent, unpredictable latency issues related to the current IEEE 802.16e-2005 REP-REQ/RSP protocol and other known MAC layer signalling. The proposed signalling mechanism allows the BS to instruct the MS to make a measurement on an event triggered basis by the means of an enhanced REP-REQ/RSP or other similar MAC layer message. This novel signalling protocol will significantly reduce the latency involved with respect to the existing REP-REQ/RSP procedure. Moreover, the unpredictability previously stated can be controlled by the BS (or other network station) thus allowing for faster and more accurate management of radio resource when operating with event triggered message requests.

Hence, the use of MAC layer signalling which has previously suffered from disadvantages of high latency and unpredictability is significantly improved by a pre-allocation of timing.

The wireless communications system may comprise any collection of nodes or communication apparatuses which are capable of communicating wirelessly with one another, for example by forming a wireless network. For example, the wireless communications system may comprise a WiMAX network, based on the IEEE 802.16 standards. In another example, the wireless communications system may comprise a telecommunications network, for example based on the standards developed by 3GPP or 3GPP2.

The network station may comprise any apparatus which serves directly or indirectly to control access by other stations to network resources, which may include, for example, permitting access to the resources, allocating bandwidth, monitoring connections, and so on. Thus this may be a femto/pico/macro or other type of base station (BS) or a relay station (RS) or an access point (AP).

The subscriber station (SS) may comprise any apparatus which is used by a user to access network resources. The subscriber station may or may not be portable, and may be intended for location indoors or outdoors. Examples of subscriber stations may include handsets, mobile telephones, smartphones, PC peripherals or components, consumer electronics devices, game terminals and mp3 players. The subscriber station may comprise a mobile station (MS) or user equipment, for example. It is to be understood that the terms SS and MS are used interchangeably, and that the term MS when used does not limit the invention to stations which are mobile.

In wireless communication systems in which invention embodiments may be implemented, transmission of data packets may take place within "frames" which are the predetermined unit of time (and available transmission frequency bandwidth) in the system. The system may use time division duplexing (TDD) or frequency division duplexing (FDD). If TDD is used, each TDD frame conventionally has one downlink subframe followed by one uplink subframe, these in turn being divided in the time and frequency domain into a number of slots or resource blocks (which may be combined into transmission windows allocated for a certain purpose), and when utilising multiple transmit antennas possibly also divided spatially into a number of streams. Some standards implement a frame structure with a plurality of downlink subframes followed by a plurality of uplink subframes which together make up a radioframe (or frame). Alternatively or additionally several frames (or radio frames) can be considered together as a "superframe". Where superframes are present, some control signalling or other network features may be provided per superframe rather than per frame.

At the physical layer level, transmission of data may involve combining groups of subcarriers (available frequencies in the system) to form "symbols" by employing the well-known technique of OFDMA (Orthogonal Frequency Division Multiple Access). The base station can apply different modulation and coding schemes (MCS) within distinct zones of a subframe, for example to provide high data throughput to nearby users, whilst providing a more robust signal to more distant users or users moving with high mobility.

Depending on the standard in question and its implementation, the indication of timing in the MAC layer request can be in any suitable form. The indication of timing is in the form of a time offset from the request for information, and specifically in the form of a frame or subframe offset between a frame or subframe in which the request is sent and a frame or subframe in which the information is to be sent. In some standards such as IEEE 802.16 m, a plurality of downlink subframes are followed by a plurality of uplink subframes which together make up a single frame. In this case, theoretically the whole mechanism may take place within a single frame.

The timing indication can be supplied to or from the subscriber station as part of the method of the invention. For example, the indication of timing may be provided with the request for information. In this case the indication of timing may advantageously be part of the request for information, for example, a Frame_Offset TLV may be provided as part of the REP-REQ management message.

Additionally or alternatively, the indication of timing may be provided as part of a different, earlier process. In invention embodiments this indication of timing may be transmitted either by the subscriber station or by the network station as part of a capability negotiation process. Thus for instance it may take the subscriber station a certain amount of time to provide different kinds of information and as part of the capability negotiation process the subscriber station may report to the network station the inherent delays for providing these different kinds of information. These timing indication reports could, for example, be provided as a number of frames or subframes or as one or more values from which the network station may calculate a frame offset, or in any other suitable fashion.

The information sent from the subscriber station to the network station is exemplified as a channel measurement in the detailed example given, but may be a result of a channel measurement (for example for MIMO related feedback). In some preferred embodiments the information can be related to CQI (Channel Quality). Channel quality feedback provides information about channel conditions as seen by the MS. Examples of CQI-type information include, but are not limited to:
- Physical CINR;
- Effective CINR; and
- AMC Band CINR.

As another example, the information can be related to MIMO related feedback. MIMO feedback provides spatial characteristics of the channel that are required for MIMO operation. Examples of MIMO related-type information include, but are not limited to:
- Precoder Matrix Indicator (PMI);
- Rank Index (RI);
- Channel covariance matrix elements;
- Power loading factor; and
- Eigenvectors.

However, the invention embodiments are not limited to the information being a channel measurement or MIMO feedback but rather they extend to any information which is potentially provided from the subscriber station to the network station using MAC layer signalling. In some cases the information may be already available to the subscriber station. The subscriber station can verify this by recognition of the information required or a simple check. For example, the information may be the preamble RSSI and/or CINR. If the information is already available, there is no need for measurement or gathering the information. However, if the information is not already available, the method of invention embodiments may further comprise the subscriber station performing a measurement or calculation step or other method step to obtain the information before sending it to the network station.

Since the information is transmitted using a MAC message, bandwidth allocation is required for its transmission from the subscriber station to the network station. Therefore, the network station sends an uplink allocation message to the subscriber station to allow the information to be sent. This message is sent after the request for information and indication of timing. In some embodiments, the uplink allocation message can be sent in the same subframe as the request for information and indication of timing.

To give a clear link between the timing indication and uplink bandwidth allocation, the indication of timing may determine the intended time at which the uplink allocation is transmitted. For example, the uplink allocation message may be intended to be sent in a downlink subframe of a frame denoted by the indication of timing or in a downlink subframe denoted by the indication of timing. For example, in 802.16m and other standards with a plurality of downlink and/or uplink subframes per frame it may be intended to be sent in a further downlink subframe of the current frame. Preferably therefore an allocation message is sent in that frame (or subframe) and subsequently the uplink subframe or one of the uplink subframes of the same frame is then used to transmit the information. However, it may be that due to other constraints the network station does not or cannot grant bandwidth at the expected time. In this case, the allocation may be sent in the next available frame (or subframe) and the subscriber station preferably monitors from the intended time, for example in each subsequent frame to the frame denoted by the indication of timing, to check for the uplink allocation message, or in each subsequent subframe, if the system concerned has a plurality of uplink and/or downlink subframes per frame. This mechanism allows for scheduling flexibility, because the network station is not absolutely required to make an uplink bandwidth allocation at a certain time instant.

In order to provide an easy way for each subscriber station to identify requests sent to it using embodiments of the present invention, the request for information is preferably qualified by identification of the subscriber station. For example, this may be in the form of a connection ID or subscriber station ID. Preferably therefore the subscriber station receives the request for information by recognising its own identification.

The method of invention embodiments is not limited to a certain type of information or measurement. Therefore the method can be repeated for more than one different type of information, each having a separate trigger. Alternatively the method may be repeated to request the same type of information on multiple occasions.

The trigger may be any suitable trigger which leads to the BS requiring more information or a different kind of information or information from another user. For example the trigger may be a radio environment change or a failed PHY level transmission of the information in question or a capacity shortage in PHY layer transmissions resource.

Examples of events which can act as triggers are:
1. Loss of CQICH synchronisation with existing MS
2. New MS enters network while the CQICH region is fully occupied
3. New report type required from an existing MS with dedicated CQI channel; this may be due to change in radio environment for the MS and/or the BS.
   (i) In certain FFR (fractional frequency reuse) algorithms, the zone switch between the Reuse1 and Reuse3 region is triggered depending on whether a given measurement falls below or above a certain threshold. In such case, this type of measurement may be requested by the BS by means of REP-REQ.
   (ii) If the BS capabilities need adjusting for a temporary period (for load-balancing, etc), it may request measurement reports from an MS which are different than those pre-negotiated for fast-feedback.
4. To increase the fast-feedback region capacity by requesting slow-term measurements through REP-REQ mechanism.

The invention also extends to further aspects, each of which may be freely combined with the first aspect and/or any of the other aspect(s), including their preferable features as defined primarily in the dependent claims and corresponding statements of invention. These further aspects relate to the wireless communication system (or network), the subscriber station and network station and methods carried out in these stations, as well as computer programs relating to each of the previous aspects.

In one aspect, embodiments of the invention provide a wireless communication system comprising a network station and a subscriber station, the communication system further comprising:
event recognition means operable to recognise a trigger for providing information from the subscriber station to the network station;
timing provision means operable to provide an indication of timing for sending the information to the network station; whereinthe indication of timing is in the form of a time offset from the request for information, indicating a frame or subframe offset between a frame or subframe in which the request is sent and a frame or subframe in which the information is to be sent;
network station processing and transmitting means operable to produce a MAC layer request for the information and transmit it to the subscriber station and operable to transmit an uplink bandwidth allocation message to the subscriber station after the MAC layer request; and
subscriber station processing and transmission means operable to produce a MAC layer message containing the information and transmit it to the network station.

The event recognition means may be situated in the network station, or in a central network entity as appropriate, if one is provided for network control of a plurality of base stations and/or relay stations.

According to embodiments of an apparatus aspect, there is provided a network station operable to obtain information, as a result of a trigger, from a subscriber station, in a wireless communication system comprising the network station and the subscriber station, the network station comprising:
processing and transmission means operable to produce a MAC layer request for the information and transmit it to the subscriber station;
bandwidth allocation means operable to use a predetermined indication of timing for transmitting the information to the network station using MAC layer protocols to allocate uplink bandwidth to the subscriber station for sending the information after the MAC layer request; wherein the indication of timing is in the form of a time offset from the request for information, indicating a frame or subframe offset between a frame or subframe in which the request is sent and a frame or subframe in which the information is to be sent after the MAC layer request; and
reception means operable to receive a MAC layer message from the subscriber station transmitting the information to the network station using the allocated uplink bandwidth.

The term processing means is used herein in a broad sense to encompass any arrangement of processing capability required for proper station functioning and any required control. Where different processing means are defined, they may be combined in a single processing unit as appropriate. In the foregoing definitions the bandwidth allocation means may be viewed essentially as control means.

There may be provided a corresponding method in a network station.

According to embodiments of a further apparatus aspect, there is provided a subscriber station operable to provide information, as a result of a trigger, from the subscriber station to a network station in a wireless communication system comprising the network station and the subscriber station, the subscriber station comprising:
subscriber station reception means operable to receive a MAC layer request for the information transmitted from the network; and to receive an uplink bandwidth allocation message transmitted after the MAC layer request;
subscriber station processing and transmission means operable to use a MAC layer message to transmit the information to the network station using the allocated bandwidth at a time corresponding to a predetermined indication of timing for sending the information to the network station using the MAC layer; wherein
the indication of timing is in the form of a time offset from the request for information, indicating a frame or subframe offset between a frame or subframe in which the request is sent and a frame or subframe in which the information is to be sent.

There may be provided a corresponding method in a subscriber station

As set out above, the indication of timing can be determined by the subscriber station and/or network station during a network entry phase, or it may be transmitted by the network station with the MAC layer request. Thus the skilled reader will appreciate that the indication of timing may be determined before the other method steps and the trigger, or provided after the trigger.

The transmission time may correspond to the indication of timing in that it occurs at the time indicated, or after the time indicated.

The functions of the wireless communication system, network station and subscriber station may be controlled by software. Thus, there may be provided a computer program which, when executed on a computing device of the wireless communication system, carry out a method as set out above. Furthermore, there may also be provided a computer program which, when downloaded onto a computing device of a communication system, network station or subscriber station causes it to become the communication system, network station or subscriber station as defined in any of the above apparatus statements of invention.

Preferred features of the present invention will now be described, purely by way of example, with reference to the accompanying drawings in which:-
- Figure 1a: is a schematic diagram of a cell of a wireless network;
- Figure 1b: is a diagram showing the TDD OFDMA frame structure in 802.16e-2005;
- Figure 2: is the current IEEE 802.16e-2005 REP-REQ/RSP protocol flow;
- Figure 3: is a proposed protocol flow for enhanced REP-REQ/RSP procedure;
- Figure 4: is a TDD OFDMA frame structure in 802.16m;
- Figure 5: is a flow chart for the proposed REP-REQ/RSP procedure of invention embodiments; and
- Figure 6: is a snapshot example of REP-REQ management message encodings.

As set out above, invention embodiments propose an Enhanced MAC layer information protocol, such as an enhanced REP-REQ/RSP protocol that can be used to facilitate accurate, time sensitive reports from an MS. However, let us first understand the problems that are foreseen with respect to the current IEEE 802.16e-2005 standard when the REP-REQ/RSP protocol is used for event triggered reports.

When the BS decides it requires an 'event-driven' report from any particular MS it sends a report request (REP-REQ) MAC management message with a generic MAC header containing a Basic CID. This CID uniquely addresses this MAC management message to that particular user. The REP-REQ message will contain information of the required CINR measurement, whether it be from the preamble, particular permutation zone/subframe or data burst. Upon receipt of this message, the MS will begin measuring the required report with no strict time (e.g. frame number) in when the report should be ready for transmission. From the standards perspective, the only constraint on the preparation of the report is the maximum processing time allowed from the reception of REP-REQ until transmission of the corresponding REP-RSP which is set to a maximum value of 60ms after which the request times out and a new request may have to be issued. This high degree of flexibility can ease scheduling issues, but for event triggered report requests it is clear that this protocol may lead to a degradation in system performance due reports being inaccurate and out of date.

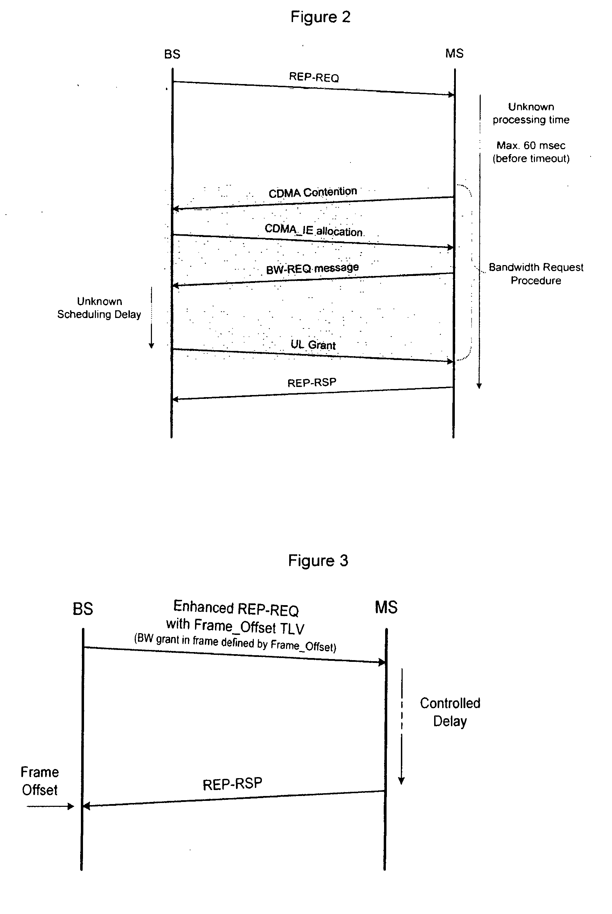

Figure 2 demonstrates the current protocol flow between the BS and MS that exists within the IEEE 802.16e-2005 standard. Here you can see the Bandwidth Request (BR) procedure that is associated with the existing protocol, comprising a CDMA contention based approach which also introduces an unpredictable scheduling delay due to the unknown frame in which the UL Grant will be received by the MS. Firstly, a CDMA contention message is sent from the MS to the BS in the ranging region which is used for bandwidth requests and shared by all users. CDMA codes are used to differentiate between the users. The MS, upon needing to request bandwidth, selects, with equal probability, a CDMA ranging code from the code subset allocated for BRs. This ranging code is modulated onto the ranging subchannel and transmitted during a Ranging Slot randomly selected from the appropriate ranging region in a single frame. Upon detection, the BS provides an (implementation dependent) UL allocation for the MS in the UL MAP, but instead of indicating a Basic CID, the Broadcast CID is sent in combination with a CDMA Allocation IE, which specifies the transmission region and CDMA ranging code that were used by the MS. This allows an MS to determine whether it has been given an allocation by matching these parameters with the parameters it used. The MS then uses the allocation to transmit a BR MAC PDU (bandwidth request). The BS will then allocate the appropriate bandwidth via a UL grant (UL MAP). There is thus an unknown scheduling delay before the BS sends a grant of UL bandwidth in the UL map. Overall, this whole process is very inefficient for a BS wishing to receive accurate, time sensitive measurement reports in an event triggered manner, mainly due to the unknown MS measurement processing time and the unknown scheduling delay at the BS.

In 802.16e some measurements are implicitly made by the MS (without BS instruction) such as Preamble RSSI and CINR therefore negating the unknown measurement time (as the measurement will always be available to the MS at any given frame) but the associated BW-REQ procedure still yields an unpredictable latency.

Invention embodiments aim to solve these problems by simply making it possible for the BS to control/define these unknown delays as part of the REP-REQ MAC or other management message. For this purpose, the inventors have found that it is possible to create a new TLV which can be termed as "Frame_Offset". TLVs (also known as 'Type/Length/Value') embody a formatting scheme that adds a tag to each transmitted parameter containing the parameter type (and implicitly its encoding rules) and the length of the encoded parameter. These TLVs can then be transmitted as part of the REP-REQ message. Note, it may alternatively or additionally be possible to define this Frame_Offset or measurement delay via a pre-negotiated procedure such as in the MS/BS capability negotiation process. This process involves an exchange of messages between the BS and MS where the MS may define its capability of processing with respect to the different measurement types. However, the remaining description will focus only on the TLV method, because this includes an extra method step. The skilled reader will appreciate this difference between the pre-negotiated and TLV methods and adapt the description for the pre-negotiated method accordingly.

Upon receipt of this Enhanced REP-REQ, the MS will read the Frame_Offset TLV (contained within REP-REQ message) and from this it will know in which frame the measurement report must be ready for transmission (alternatively it will already know the frame by which information should be ready from earlier standard capability negotiations in which the Frame_Offset for different information has been settled). The BS can then reserve some uplink resource for the corresponding REP-RSP in the frame defined by Frame_Offset (or in subsequent frames). The MS will then scan the UL-MAP/control channel in each downlink (DL) subframe of the frame indicated by the "Frame_Offset" to find a UL-MAP_IE or similar type message that contains its uniquely identified CID or MS ID. This MAP_IE will provide sufficient information on the location of the burst within the uplink subframe that will be used to carry the corresponding REP-RSP (response) MAC message. If the MS does not find a UL-MAP_IE with its Basic CID or MS ID in any of the downlink subframes of the frame indicated by the Frame_Offset it will simply check the control channels within the downlink subframes of subsequent frames until it is granted an uplink allocation.

Figure 3 demonstrates in overview the new protocol flow between the BS and MS for the proposed REP-REQ/RSP mechanism. Since the intended uplink bandwidth grant timing is already available from the REP-REQ request or from earlier signalling, the expected delay between the REP-REG and REP-RSP messages is known. It is clear from Figure 3 that the unpredictable latency previously explained and duly demonstrated in Figure 2 has been mitigated due to the proposed enhanced REP-REQ or other such MAC management message. This method will allow the BS to control the delivery of the corresponding REP-RSP or other such message thus potentially improving the ability to manage radio resources in the most efficient manner when operating with event triggered measurement requests.

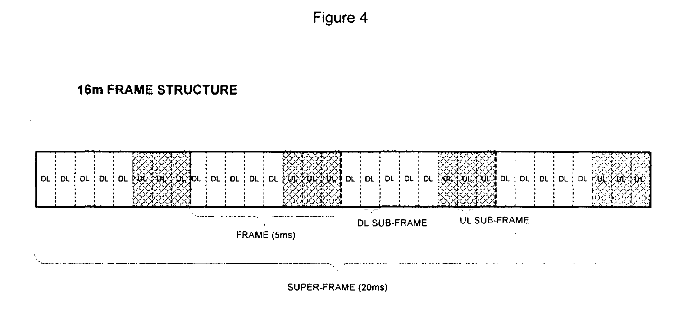

Figure 4 shows the frame structure in the WiMAX standard 802.16m. The 802.16m (or simply 16m) standard frame structure, as explained previously has a plurality of downlink and uplink subframes per frame or radio frame. Figure 4 is a high level diagram of this frame structure which shows a superframe consisting of four equally sized radio frames each having eight subframes, five for downlink and three for uplink. Each downlink subframe will contain a control channel similar to the DL and UL map in the WiMAX 802.16e standard. The MS will have to scan every downlink subframe to determine if it has allocated data. The MAC layer request can be sent in any of the DL subframes, (including an indication of timing specified in frames or subframes) and the information from the MS can be transmitted in any of the UL subframes.

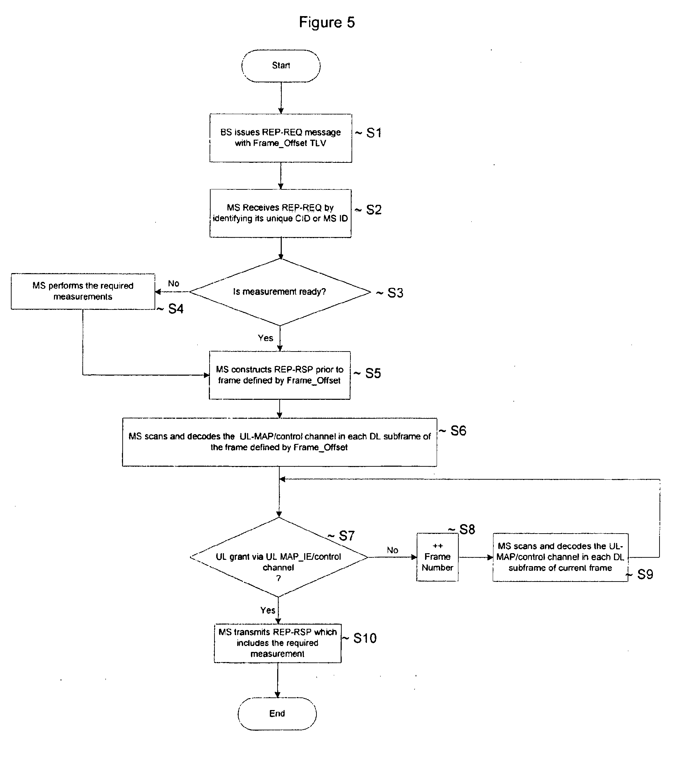

Figure 5 provides a flowchart of the procedures involved. This protocol is suitable for implementation both with single downlink and uplink subframes in a single frame and with plural downlink and uplink subframes in a single radio frame.

Step 1 - When the BS decides it requires an 'event triggered' measurement (or information) from any given MS it sends the Enhanced REP-REQ MAC message to that MS. This message contains the required measurement type along with the frame offset. Note, as mentioned previously it may be possible to obtain the frame offset from a pre-negotiated procedure such as capability negotiations.

Step 2 - When the MS decodes the DL MAP or DL control channel and finds a MAP_IE which contains its unique CID or MS-ID it then decodes the burst containing the REP-REQ message. The MS will then know which type of measurement or information is required and in which frame it must be transmitted.

Step 3 - Based on *Step 2* the MS must determine if the required measurement is already available. An example of such a measurement that is continuously measured and therefore always available is the Preamble RSSI and/or CINR. If the measurement or information is available, go to *Step 5.*

Step 4 - If the measurement or information is not readily available in Step 3 the MS performs the required measurement or obtains the required information indicated in *Step 2.*

Step 5 - The MS will then construct the REP-RSP management message which contains the required measurement.

Step 6 - The MS will then scan the UL MAP/control channel in the or each downlink subframe of the frame defined by the frame offset as to determine if the BS has granted the MS with an uplink allocation.

Step 7 - From decoding the UL-MAP/control channel in the or each downlink subframe the MS decides if uplink allocation has been granted. If a UL Grant available, go to *Step 10.*

Step 8 - Increment frame by 1

Step 9 - The MS will then decode the UL MAP/control channel in the or each downlink subframe of the current frame so as to determine if the BS has granted the MS with an uplink allocation.

Step 10 - If the MS has been granted uplink bandwidth it then transmits the pre-constructed REP-RSP message from *Step 5.*

If there is no response from the MS or BS at any stage during the method, there can be a "time-out" provision.

The skilled person will appreciate that the entire method can be carried out in a single frame of a 16m frame structure. For example the MAC layer request for information may be sent in one downlink subframe of a radio frame, followed by the uplink allocation in a further subframe of the same radio frame. The MAC layer message containing the measurement or information which may be already available or produced on the fly by the subscriber station can be transmitted to the network station in a subsequent uplink subframe of the same radio frame. Thus the skilled reader will appreciate that the Frame_Offset described above could also be a subframe offset in the circumstances. This use of the multiple uplink and downlink subframe structure available in some standards is clearly advantageous in shortening the delay for transmitting the information from the subscriber station to the network station.

In one preferred embodiment, the UL bandwidth allocation can even be sent out at approximately the same time as the request, preferably in the same subframe, in step 1. In this case the frame (or subframe) offset may be set to zero. In step 2, the MS can both receive the request and identity the UL allocation, if any in that subframe. Thus step 2 can be combined with step 6. In this case there is a possibility of carrying out the whole method in a single frame, even if only one downlink and one uplink subframe is provided per frame. Alternatively, in a system with multiple uplink/downlink subframes, the UL allocation can be sent out at the same time as the request and indication of timing, and specify one of a plurality of uplink subframes in the same frame.

In some circumstances it may be that the information measurement cannot be sent in a single radio frame. For example, if the information is not available and must be obtained, it could be that an offset of more than one frame is required. Therefore the Frame_Offset may be defined to allow the method to function with a delay of between zero or one subframe and a plurality of frames.

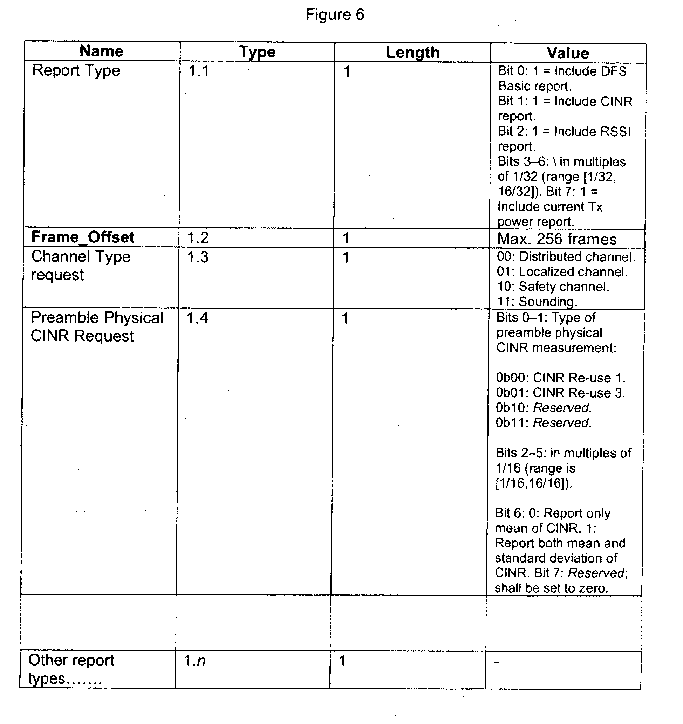

For information purposes, Figure 6 shows a snapshot of the REP-REQ management message encodings that includes the proposed Frame_Offset TLV.

Invention embodiments intend to provide better flexibility in signaling between the BS and MS to solve some of the inherent, unpredictable latency issues related to the current IEEE 802.16e-2005 REP-REQ/RSP protocol and other MAC layer protocols.

The proposed signalling mechanism allows the BS to instruct the MS to make a measurement on an event triggered basis by the means of an enhanced REP-REQ/RSP protocol or other MAC-layer protocol. This novel signalling protocol will significantly reduce and control the latency involved with respect to the existing procedures. Moreover, the unpredictability previously explained can be controlled by the BS thus allowing for faster and more accurate management of radio resource when operating with event triggered message requests.

Invention embodiments;
a. Provide an enhanced MAC layer REP-REQ/RSP signaling protocol for efficiently managing event triggered measurement requests
b. Enhance radio network performance by enabling faster and more reliable measurement reports via a MAC protocol
c. Increase the capacity of a network by significantly reducing MAC layer signaling overhead.
d. Add more control in the BS to facilitate low latency event triggered report requests
e. Provide reduced implementation complexity.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method of providing information, as a result of a trigger, from a subscriber station (MS) to a network station in a wireless communication system comprising the network station and the subscriber station, the method comprising:
providing an indication of timing for sending the information to the network station (BS);
the network station (BS) transmitting a MAC layer request for the information to the subscriber station; and
the subscriber station then using a MAC layer message to transmit the information to the network station at a time corresponding to the indication of timing; wherein
the indication of timing is in the form of a time offset from the request for information, indicating a frame or subframe offset between a frame or subframe in which the request is sent and a frame or subframe in which the information is to be sent; and wherein
after the request for information and indication of timing, the network station sends an uplink bandwidth allocation message to the subscriber station to allow the information to be sent.

2. A method according to claim 1, in which the indication of timing is provided by the network station (BS) with the request for information, preferably as part of the request for information.

3. A method according to claim 1, wherein the indication of timing by the network station (BS) is provided as part of a capability negotiation process between the subscriber station and the network station.

4. A method according to any of the preceding claims, wherein the information is a channel measurement or a result of a channel measurement, such as MIMO feedback.

5. A method according to any of the preceding claims, further including the subscriber station (MS) verifying whether the information is already available in the subscriber station;
wherein if the information is available in the subscriber station, no extra method step is taken to obtain the information; and
wherein if the information is not available in the subscriber station, the method further comprises the subscriber station obtaining the information, for example by performing a measurement before sending the information to the network station in the MAC layer message.

6. A method according to any of the preceding claims, wherein the indication of timing determines the intended time of the uplink bandwidth allocation message and preferably wherein the uplink bandwidth allocation message is intended to be sent in a downlink subframe denoted by the indication of timing.

7. A method according to claim 6, wherein the subscriber station (MS) monitors for an uplink bandwidth allocation from the intended time of the uplink bandwidth allocation message.

8. A method according to claim 7, wherein if the network station does not send the uplink bandwidth allocation message in the downlink subframe denoted by the indication of timing, the subscriber station (MS) monitors each subsequent downlink subframe for the uplink allocation message.

9. A method according to any of the preceding claims, in which the request for information is qualified by an identification of the subscriber station, preferably in the form of a connection ID or subscriber station ID; and in which the subscriber station receives the request for information by recognising its own identification.

10. A method according to any of the preceding claims, wherein the method is repeated for more than one different type of information, each having a separate trigger and/or wherein the trigger is a radio environment change or change of requirement or a failed PHY level transmission of the information or a capacity shortage for PHY layer transmission resource.

11. A wireless communications system comprising a network station and a subscriber station, the communication system comprising:
event recognition means operable to recognise a trigger for providing information from the subscriber station to the network station;
timing provision means operable to provide an indication of timing for sending the information to the network station; wherein the indication of timing is in the form of a time offset from a MAC layer request for information, indicating a frame or subframe offset between a frame or subframe in which the MAC layer request is sent and a frame or subframes in which the information is to be sent;
network station processing and transmitting means operable to produce the MAC layer request for the information and transmit it to the subscriber station and operable to transmit an uplink bandwidth allocation message to the subscriber station after the MAC layer request; and
subscriber station processing and transmission means operable to produce a MAC layer message containing the information and transmit it to the network station.

12. A network station operable to obtain information, as a result of a trigger, from a subscriber station, in a wireless communication system comprising the network station and the subscriber station, the network station comprising:
processing and transmission means operable to produce a MAC layer request for the information and transmit it to the subscriber station;
bandwidth allocation means operable to use a predetermined indication of timing for transmitting the information to the network station using MAC layer protocols to allocate uplink bandwidth to the subscriber station for sending the information after the MAC layer request; wherein the indication of timing is in the form of a time offset from the request for information, indicating a frame or subframe offset between a frame or subframe in which the request is sent and a frame or subframe in which the information is to be sent; and
reception means operable to receive a MAC layer message from the subscriber station transmitting the information to the network station.

13. A subscriber station operable to provide information, as a result of a trigger, from the subscriber station to a network station in a wireless communication system comprising the network station and the subscriber station, the subscriber station comprising:
subscriber station reception means operable to receive a MAC layer request for the information transmitted from the network station; and to receive an uplink bandwidth allocation message transmitted after the MAC layer request;
subscriber station processing and transmission means operable to use a MAC layer message to transmit the information to the network station using the allocated bandwidth at a time indicated by a predetermined indication of timing for sending the information to the network station using the MAC layer; wherein
the indication of timing is in the form of a time offset from the request for information, indicating a frame or subframe offset between a frame or subframe in which the request is sent and a frame or subframe in which the information is to be sent.

## Patentansprüche

1. Verfahren zum Bereitstellen von Informationen infolge eines Auslöseimpulses von einer Teilnehmerstation (MS) an eine Netzwerkstation in einem drahtlosen Kommunikationssystem, das die Netzwerkstation und die Teilnehmerstation umfasst, wobei das Verfahren Folgendes umfasst:
Bereitstellen einer Angabe zur Zeitvorgabe für das Senden der Information an die Netzwerkstation (BS),
Übertragen einer MAC-Schicht-Anfrage nach der Information zur Teilnehmerstation durch die Netzwerkstation (BS) und
Verwenden der MAC-Schicht-Nachricht durch die Teilnehmerstation, um die Information zu einem Zeitpunkt zur Netzwerkstation zu übertragen, der der Angabe zur Zeitvorgabe entspricht, wobei
die Angabe zur Zeitvorgabe in Form eines Zeitversatzes von der Anfrage nach der Information vorliegt, der einen Frame- oder Subframe-Versatz zwischen einem Frame oder Subframe angibt, in dem die Anfrage gesendet wird, und einem Frame oder Subframe, in dem die Information gesendet werden soll, und wobei
nach der Anfrage nach der Information und der Angabe der Zeitvorgabe die Netzwerkstation eine Aufwärtsstreckenbandbreite-Zuteilungsnachricht an die Teilnehmerstation sendet, um das Senden der Information zu ermöglichen.

2. Verfahren nach Anspruch 1, wobei die Angabe zur Zeitvorgabe durch die Netzwerkstation (BS) mit der Anfrage nach der Information bereitgestellt wird, vorzugsweise als Teil der Anfrage nach der Information.

3. Verfahren nach Anspruch 1, wobei die Angabe zur Zeitvorgabe durch die Netzwerkstation (BS) als Teil eines Ressourcenverhandlungsprozesses zwischen der Teilnehmerstation und der Netzwerkstation bereitgestellt wird.

4. Verfahren nach einem der vorhergehenden Ansprüche, wobei die Information eine Kanalmessung oder ein Ergebnis einer Kanalmessung ist, wie beispielsweise eine MIMO-Rückkopplung.

5. Verfahren nach einem der vorhergehenden Ansprüche, ferner beinhaltend, dass die Teilnehmerstation (MS) prüft, ob die Information bereits in der Teilnehmerstation verfügbar ist,
wobei kein weiterer Verfahrensschritt erfolgt, um die Information zu gewinnen, wenn die Information in der Teilnehmerstation verfügbar ist, und
wobei das Verfahren, wenn die Information nicht in der Teilnehmerstation verfügbar ist, ferner umfasst, dass die Teilnehmerstation die Information gewinnt, zum Beispiel durch Ausführen einer Messung vor dem Senden der Information an die Netzwerkstation in der MAC-Schicht-Nachricht.

6. Verfahren nach einem der vorhergehenden Ansprüche, wobei die Angabe zur Zeitvorgabe die vorgesehene Zeit für die Aufwärtsstreckenbandbreite-Zuteilungsnachricht bestimmt und wobei die Aufwärtsstreckenbandbreite-Zuteilungsnachricht vorzugsweise dafür vorgesehen ist, in einem Abwärtsstrecken-Subframe gesendet zu werden, der durch die Angabe zur Zeitvorgabe gekennzeichnet ist.

7. Verfahren nach Anspruch 6, wobei die Teilnehmerstation (MS) ab der vorgesehenen Zeit der Aufwärtsstreckenbandbreite-Zuteilungsnachricht auf eine Aufwärtsstreckenbandbreite-Zuteilung überwacht.

8. Verfahren nach Anspruch 7, wobei die Teilnehmerstation (MS) jeden nachfolgenden Abwärtsstrecken-Subframe auf die Aufwärtsstrecken-Zuteilungsnachricht überwacht, wenn die Netzwerkstation in dem durch die Angabe zur Zeitvorgabe gekennzeichneten Abwärtsstrecken-Subframe die Aufwärtsstreckenbandbreite-Zuteilungsnachricht nicht sendet.

9. Verfahren nach einem der vorhergehenden Ansprüche, wobei die Anfrage nach der Information durch eine Kennung der Teilnehmerstation näher bestimmt wird, vorzugsweise in Form einer Verbindungskennung oder Teilnehmerstationskennung, und wobei die Teilnehmerstation die Anfrage nach der Information durch Erkennen ihrer eigenen Kennung empfängt.

10. Verfahren nach einem der vorhergehenden Ansprüche, wobei das Verfahren für mehr als eine andere Informationsart wiederholt wird, die jeweils einen separaten Auslöseimpuls aufweist und/oder wobei der Auslöseimpuls eine Funkumgebungsänderung oder Anforderungsänderung oder eine fehlgeschlagene PHY-Ebene-Übertragung der Information oder ein Kapazitätsmangel der PHY-Schicht ist.

11. Drahtloses Kommunikationssystem, eine Netzwerkstation und eine Teilnehmerstation umfassend, wobei das Kommunikationssystem Folgendes umfasst:
Ereigniserkennungsmittel, die funktionsfähig sind, einen Auslöseimpuls zum Bereitstellen von Informationen von der Teilnehmerstation an die Netzwerkstation zu erkennen,
Zeitvorgabe-Bereitstellungsmittel, die funktionsfähig sind, eine Angabe zur Zeitvorgabe für das Senden der Information an die Netzwerkstation bereitzustellen, wobei die Angabe zur Zeitvorgabe in Form eines Zeitversatzes von einer MAC-Schicht-Anfrage nach der Information vorliegt, der einen Frame- oder Subframe-Versatz zwischen einem Frame oder Subframe angibt, in dem die MAC-Schicht-Anfrage gesendet wird, und einem Frame oder Subframe, in dem die Information gesendet werden soll,
Netzwerkstation-Verarbeitungs- und -Übertragungsmittel, die funktionsfähig sind, die MAC-Schicht-Anfrage nach der Information zu erzeugen und diese zur Teilnehmerstation zu übertragen, und funktionsfähig sind, nach der MAC-Schicht-Anfrage eine Aufwärtsstreckenbandbreite-Zuteilungsnachricht zur Teilnehmerstation zu übertragen, und
Teilnehmerstation-Verarbeitungs-und - Übertragungsmittel, die funktionsfähig sind, eine MAC-Schicht-Nachricht zu erzeugen, die die Information enthält, und diese zur Netzwerkstation zu übertragen.

12. Netzwerkstation, die funktionsfähig ist, in einem drahtlosen Kommunikationssystem, das die Netzwerkstation und eine Teilnehmerstation umfasst, die Information infolge eines Auslösesignals von der Teilnehmerstation zu gewinnen, wobei die Netzwerkstation Folgendes umfasst:
Verarbeitungs- und Übertragungsmittel, die funktionsfähig sind, eine MAC-Schicht-Anfrage für die Information zu erzeugen und diese zur Teilnehmerstation zu übertragen,
Bandbreite-Zuordnungsmittel, die funktionsfähig sind, eine festgelegte Angabe zur Zeitvorgabe zum Übertragen der Information mit Hilfe von MAC-Schicht-Protokollen zur Netzwerkstation zu verwenden, um der Teilnehmerstation nach der MAC-Schicht-Anfrage eine Aufwärtsstreckenbandbreite zum Senden der Information zuzuteilen, wobei die Angabe zur Zeitvorgabe in Form eines Zeitversatzes von der Anfrage nach der Information vorliegt, der einen Frame- oder Subframe-Versatz zwischen einem Frame oder Subframe angibt, in dem die Anfrage gesendet wird, und einem Frame oder Subframe, in dem die Information gesendet werden soll, und
Empfangsmittel, die funktionsfähig sind, eine MAC-Schicht-Nachricht von der Teilnehmerstation zu empfangen, die die Information zur Netzwerkstation überträgt.

13. Teilnehmerstation, die funktionsfähig ist, in einem drahtlosen Kommunikationssystem, das eine Netzwerkstation und die Teilnehmerstation umfasst, infolge eines Auslösesignals Informationen von der Teilnehmerstation für die Netzwerkstation bereitzustellen, wobei die Teilnehmerstation Folgendes umfasst:
Teilnehmerstation-Empfangsmittel, die funktionsfähig sind, eine MAC-Schicht-Anfrage nach der Information zu empfangen, die von der Netzwerkstation übertragen wird, und eine Aufwärtsstreckenbandbreite-Zuteilungsnachricht zu empfangen, die nach der MAC-Schicht-Anfrage übertragen wird,
Teilnehmerstation-Verarbeitungs- und -Übertragungsmittel, die funktionsfähig sind, eine MAC-Schicht-Nachricht zu verwenden, um die Information mit Hilfe der zugeteilten Bandbreite zur Netzwerkstation zu übertragen, zu einer Zeit, die durch eine festgelegte Angabe zur Zeitvorgabe zum Senden der Information an die Netzwerkstation mit Hilfe der MAC-Schicht angegeben ist, wobei
die Angabe zur Zeitvorgabe in Form eines Zeitversatzes von der Anfrage nach der Information vorliegt, der einen Frame- oder Subframe-Versatz zwischen einem Frame oder Subframe angibt, in dem die Anfrage gesendet wird, und einem Frame oder Subframe, in dem die Information gesendet werden soll.

## Revendications

1. Procédé pour délivrer une information, en résultat d'un déclencheur, d'une station d'abonné (MS) à une station de réseau dans un système de communication sans fil comprenant la station de réseau et la station d'abonné, le procédé comportant :
la délivrance d'une indication de temps pour envoyer l'information à la station de réseau (BS) ;
la station de réseau (BS) transmettant une requête de couche MAC pour l'information à la station d'abonné ; et
la station d'abonné utilisant ensuite un message de couche MAC pour transmettre l'information à la station de réseau à un temps correspondant à l'indication de temps ; dans lequel
l'indication de temps est prévue sous la forme d'un décalage de temps à partir de la requête d'information, indiquant un décalage de trame ou de sous-trame entre une trame ou une sous-trame dans laquelle la requête est envoyée et une trame ou une sous-trame dans laquelle l'information doit être envoyée ; et dans lequel
après la requête d'information et l'indication de temps, la station de réseau envoie un message d'allocation de largeur de bande pour liaison montante à la station d'abonné pour autoriser l'envoi de l'information.

2. Procédé selon la revendication 1, dans lequel l'indication de temps est délivrée par la station de réseau (BS) avec la requête d'information, de préférence en tant que partie de la requête d'information.

3. Procédé selon la revendication 1, dans lequel l'indication de temps par la station de réseau (BS) est délivrée en tant que partie d'un processus de négociation de capacité entre la station d'abonné et la station de réseau.

4. Procédé selon l'une quelconque des revendications précédentes, dans lequel l'information est une mesure de canal ou un résultat d'une mesure de canal, telle qu'une rétroaction MIMO.

5. Procédé selon l'une quelconque des revendications précédentes, comprenant en outre la station d'abonné (MS) vérifiant si l'information est déjà disponible dans la station d'abonné ;
dans lequel si l'information est disponible dans la station d'abonné, aucune étape de procédé supplémentaire n'est effectuée pour obtenir l'information ; et
dans lequel si l'information n'est pas disponible dans la station d'abonné, le procédé comporte en outre la station d'abonné obtenant l'information, par exemple en effectuant une mesure avant l'envoi de l'information à la station d'abonné dans le message de couche MAC.

6. Procédé selon l'une quelconque des revendications précédentes, dans lequel l'indication de temps détermine le temps prévu du message d'allocation de largeur de bande pour liaison montante et de préférence dans lequel le message d'allocation de largeur de bande pour liaison montante est prévu pour être envoyé dans une sous-trame en liaison descendante désignée par l'indication de temps.

7. Procédé selon la revendication 6, dans lequel la station d'abonné (MS) surveille une allocation de largeur de bande pour liaison montante à partir du temps prévu du message d'allocation de largeur de bande pour liaison montante.

8. Procédé selon la revendication 7, dans lequel si la station de réseau n'envoie pas de message d'allocation de largeur de bande pour liaison montante dans la sous-trame de liaison descendante désignée par l'indication de temps, la station d'abonné (MS) surveille chaque sous-trame de liaison descendante suivante pour le message d'allocation de liaison montante.

9. Procédé selon l'une quelconque des revendications précédentes, dans lequel la requête d'information est qualifiée par une identification de la station d'abonné, de préférence sous la forme d'une ID de connexion ou d'une ID de station d'abonné ; et dans lequel la station d'abonné reçoit la requête d'information en reconnaissant sa propre identification.

10. Procédé selon l'une quelconque des revendications précédentes, dans lequel le procédé est répété pour plus d'un type différent d'information, chacun possédant un déclencheur distinct et/ou dans lequel le déclencheur est un changement d'environnement radio ou un changement de demande ou une transmission au niveau PHY avortée de l'information ou un manque de capacité pour une ressource de transmission de couche PHY.

11. Système de communication sans fil comportant une station de réseau et une station d'abonné, le système de communication comportant :
un moyen de reconnaissance d'événement pouvant reconnaître un déclencheur pour délivrer une information provenant de la station d'abonné à la station de réseau ;
un moyen de délivrance de temps permettant de délivrer une indication de temps pour envoyer l'information à la station de réseau ; dans lequel l'indication de temps est prévue sous la forme d'un décalage de temps à partir d'une requête de couche MAC pour l'information, indiquant un décalage de trame ou de sous-trame entre une trame ou une sous-trame dans laquelle la requête de couche MAC est envoyée et une trame ou une sous-trame dans laquelle l'information doit être envoyée ;
un moyen de traitement de station de réseau et de transmission pouvant produire la requête de couche MAC pour l'information et la transmettre à la station d'abonné et pouvant transmettre un message d'allocation de largeur de bande pour liaison montante à la station d'abonné après la requête de couche MAC ; et
un moyen de traitement de station d'abonné et de transmission pouvant produire un message de couche MAC contenant l'information et la transmettre à la station de réseau.

12. Station de réseau pour obtenir une information, en résultat d'un déclencheur, à partir de la station d'abonné, dans un système de communication sans fil comportant la station de réseau et la station d'abonné, la station de réseau comportant :
un moyen de traitement et de transmission pouvant produire une requête de couche MAC pour l'information et la transmettre à la station d'abonné ;
un moyen d'allocation de largeur de bande pouvant utiliser une indication de temps prédéterminée pour transmettre l'information à la station de réseau en utilisant des protocoles de couche MAC pour allouer une largeur de bande pour liaison montante à la station d'abonné afin d'envoyer l'information après la requête de couche MAC; dans lequel l'indication de temps est prévue sous la forme d'un décalage de temps à partir de la requête d'information, indiquant un décalage de trame ou de sous-trame entre une trame ou une sous-trame dans laquelle la requête est envoyée et une trame ou une sous-trame dans laquelle l'information doit être envoyée ; et
un moyen de réception pouvant recevoir un message de couche MAC depuis la station d'abonné transmettant l'information à la station de réseau.

13. Station d'abonné pouvant délivrer une information, en résultat d'un déclencheur, à partir de la station d'abonné à la station de réseau dans un système de communication sans fil comportant la station de réseau et la station d'abonné, la station d'abonné comportant :
un moyen de réception de station d'abonné pouvant recevoir une requête de couche MAC pour l'information transmise à partir de la station de réseau ; et pour recevoir un message d'allocation de largeur de bande pour liaison montante transmise après la requête de couche MAC ;
un moyen de traitement de station d'abonné et de transmission pouvant utiliser le message de couche MAC pour transmettre l'information à la station de réseau en utilisant la largeur de bande allouée à un temps indiqué par une indication de temps prédéterminée pour envoyer l'information à la station de réseau en utilisant la couche MAC ; dans lequel
l'indication de temps est prévue sous la forme d'un décalage de temps à partir de la requête d'information, indiquant un décalage de trame ou de sous-trame entre une trame ou une sous-trame dans laquelle la requête est envoyée et une trame ou une sous-trame dans laquelle l'information doit être envoyée.
